# EUROPEAN PATENT APPLICATION

(11) **EP 1 619 542 A1**
(43) Date of publication of application: **25.01.2006**
(21) Application number: 04727100.2
(22) Date of filing: 13.04.2004
(51) Int. Cl.: G02F 1/1335, G02B 5/04, G02B 5/02

(54) **LIQUID CRYSTAL DISPLAY DEVICE**

(30) Priority: 25.04.2003 JP 2003122432
(71) Applicant: SONY CORPORATION, Tokyo 141-0001 (JP)
(72) Inventor: Nakano, Minoru, Tokyo 141-0001 (JP)
(74) Representative: Thévenet, Jean-Bruno
(86) International application number: PCT/JP2004/005255
(87) International publication number: WO 2004/097511

(57) **Abstract**

The present invention provides a liquid crystal display apparatus in which efficiency in using light from a backlight is improved, the illuminance on the screen is enhanced, and the manufacturing costs can be reduced.

The liquid crystal display apparatus of the present invention includes: a first substrate 5 provided with a reflective pixel electrode 7 which reflects light, a second substrate 11 in which a transparent electrode 9 facing the reflective pixel electrode is formed and which is arranged in parallel with the first substrate 5, a liquid crystal 8 enclosed between the first substrate 5 and second substrate 11, a backlight 2 applying illumination light from the back surface of the first substrate 5, and a light focusing plate 4 including a number of line-shaped prisms LP focusing illumination light from the backlight 2 onto the arrangement of the reflective pixel electrodes 7. A portion having gradation in reflectance is provided in the reflective pixel electrode 7 for each pixel unit, in which reflectance on the inner side is low and continuously changes to be gradually high toward the outer side.

According to the present invention, a liquid crystal display apparatus can be obtained in which the illuminance on the screen when an image is displayed using a backlight can be enhanced without increasing light amount from the backlight, efficiency in using backlight can be improved and the production costs can be reduced.

## Description

### TECHNICAL FIELD

The present invention relates to a liquid crystal display apparatus of a semi-transmissive type including an image display function of a reflective type and an image display function of a transmissive type.

### BACKGROUND ART

Lately, as a display apparatus for a device of mobile use such as a mobile phone unit and PDA (Personal Digital Assistance), what is called a color liquid crystal display apparatus of a semi-transmissive type in which visibility can be secured both indoors and outdoors has been used.

Conventionally, in a color liquid crystal display apparatus of a semi-transmissive type, a pixel is formed of a reflective pixel electrode which reflects light entering from the outside and in which an opening is formed. Then, external light is reflected in bright environments by the reflective pixel electrode to display an image, and illuminating light from a backlight is transmitted in dark environments through the opening formed in the reflective pixel electrode to display an image.

As a conventional liquid crystal display apparatus of this kind, there is one disclosed in Patent Literature 1, for example. This liquid crystal display apparatus has both the function of a reflective type capable of displaying an image using external light in a bright condition, for example, in the daytime and the function of a transmissive type capable of displaying an image using a backlight (light source illuminating from the back surface) when external light is scarce in a dark condition, for example, in the night-time.
Patent Literature 1
Published Japanese Patent Application No. 2000-298267 (page 2, FIG. 1)

Hereupon, with respect to a semi-transmissive type color liquid crystal display apparatus, in order to secure the visibility when using the external light, the area of the opening of the reflective pixel electrode is limited and so there is a disadvantage that efficiency in using illuminated light is low when a backlight is used, which makes the illuminance on screen low. If a backlight is highly activated in order to enhance the illuminance on the screen when the backlight is used, power consumption for the backlight increases to cause an inconvenience that the duration of batteries becomes short in mobile devices.

In the above described Patent Literature 1, for example, there is disclosed technology that solves such a disadvantage and enhances illuminance on the screen when a backlight is used. Patent Literature 1 discloses technology in which a micro lens is arranged between a reflective layer having an opening and a backlight at the region corresponding to the pixel, and light illuminated from the backlight is focused on the opening to enhance the illuminance on the screen.

However, in the technology disclosed in Patent Literature 1 the micro lens needs to be manufactured with accuracy, with the result that manufacturing costs may increase. Further, since the micro lens must be accurately positioned at the opening formed in the reflective layer, particular skill for the manufacture is required.

The present invention is made in view of the above described problems and the object of the invention is to provide a liquid crystal display apparatus in which efficiency in using light from a backlight is improved to enhance the illuminance on the screen and the manufacturing costs can be reduced.

### DISCLOSURE OF THE INVENTION

In order to solve the above described problems and to attain the above described object, a liquid crystal display apparatus according to the present invention includes: a first substrate provided with a reflective pixel electrode which reflects light, a second substrate in which a transparent electrode facing the reflective pixel electrode is formed and which is arranged in parallel with the first substrate, a liquid crystal enclosed between the first substrate and second substrate, a backlight applying illumination light from the back surface side of the first substrate, and a light focusing plate having a number of line-shaped prisms which focus illumination light from the backlight onto arrangement of the reflective pixel electrodes, wherein a portion having gradation of reflectance, in which the reflectance is low on the inner side and continuously changes to be gradually high toward the outer side, is provided in the reflective pixel electrode for each pixel unit.

According to the present invention, light illuminated from the backlight is focused by means of the line-shaped prisms and enters the inner side of the reflective pixel electrode through the first substrate. Therefore, in the portion having a gradation in the reflectance formed on the reflective pixel electrode, the amount of light passing through the inner part where the reflectance is low increases compared with the case where no line-shaped prism is provided. Accordingly, the illuminance on the screen when an image is displayed using the backlight can be improved without increasing light amount of the backlight.

### BRIEF DESCRIPTION OF DRAWINGS

FIG. 1 is a sectional view showing a first embodiment of a liquid crystal display apparatus of the present invention;
FIG. 2 is an exploded perspective view showing the first embodiment of the liquid crystal display apparatus of the present invention;
FIG. 3A is a plan view showing a positional relationship between a light focusing plate and a reflective pixel electrode according to the first embodiment of the liquid crystal display apparatus of the present invention;
FIG. 3B is a W-W line sectional view of FIG. 3A, showing a positional relationship between the light focusing plate and the reflective pixel electrode according to the first embodiment of the liquid crystal display apparatus of the present invention;
FIG. 4 is a sectional view showing a second embodiment of a liquid crystal display apparatus of the present invention;
FIG. 5 is an exploded perspective view showing the second embodiment of the liquid crystal display apparatus of the present invention;
FIG. 6A is a plan view showing a positional relationship between a light focusing plate and a reflective pixel electrode according to the second embodiment of the liquid crystal display apparatus of the present invention;
FIG. 6B is a V-V line sectional view of FIG. 6A, showing a positional relationship between the light focusing plate and the reflective pixel electrode according to the second embodiment of the liquid crystal display apparatus of the present invention;
FIG. 7 is a diagram showing an example of a relationship between ambient illuminance and brightness on the display screen, corresponding to the reflectance on the screen in a liquid crystal display apparatus;
FIG. 8A is an explanatory view of a striped arrangement showing an example of a pixel arrangement to which the present invention can be applied;
FIG. 8B is an explanatory view of a mosaic arrangement showing an example of a pixel arrangement to which the present invention can be applied;
FIG. 8C is an explanatory view of a delta arrangement showing an example of a pixel arrangement to which the present invention can be applied;
FIG. 9A shows an example of the shape of line-shaped prisms of a light focusing plate according to a liquid crystal display apparatus of the present invention and is an explanatory view in which the prisms constitute triangular shapes and the pitch thereof is equal to the pixel vertical pitch;
FIG. 9B shows an example of the shape of line-shaped prisms of a light focusing plate according to a liquid crystal display apparatus of the present invention and is an explanatory view in which the prisms constitute triangular shapes and the pitch thereof is half the pixel vertical pitch;
FIG. 9C shows an example of the shape of line-shaped prisms of a light focusing plate according to a liquid crystal display apparatus of the present invention and is an explanatory view in which the prisms constitute triangles of different dimensions and the pitch thereof is one third the pixel vertical pitch; and
FIG. 9D shows an example of the shape of line-shaped prisms of a light focusing plate according to a liquid crystal display apparatus of the present invention and is an explanatory view in which the prisms constitute the dome shapes and the pitch thereof is equal to the pixel vertical pitch.

### BEST MODE FOR CARRYING OUT THE INVENTION

Hereinafter, embodiments of the present invention will be explained with reference to accompanying drawings.

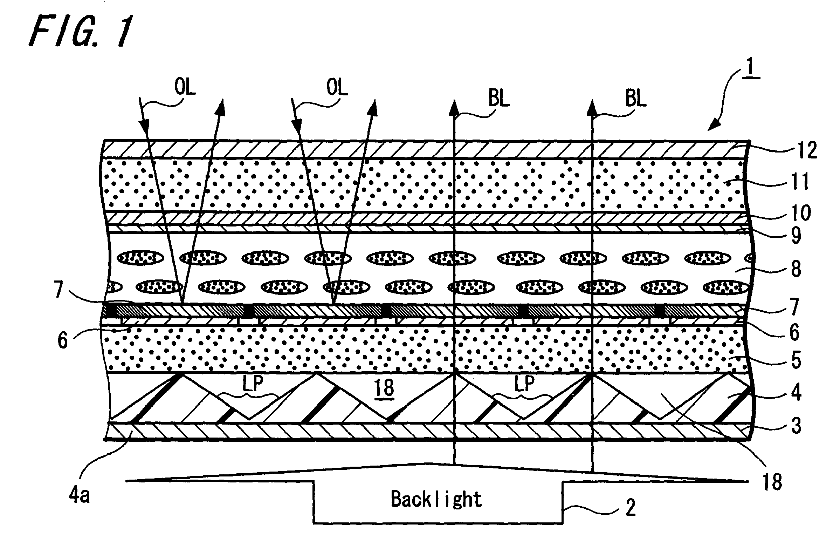

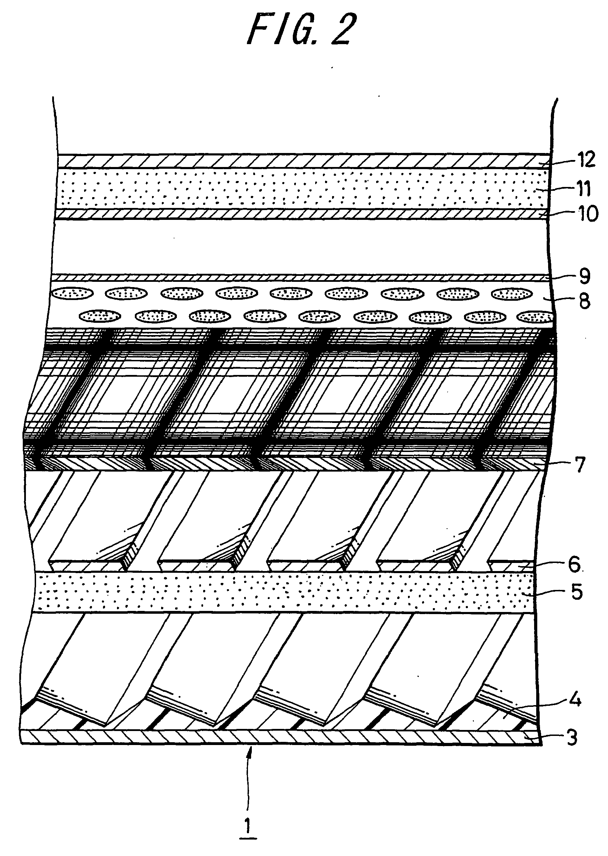

As shown in FIGS. 1 and 2, a liquid crystal display apparatus 1 according to a first embodiment of the present invention includes a backlight 2 as a light source, a first polarizing plate 3, a light focusing plate 4, a first substrate 5, a transparent pixel electrode 6, a reflective pixel electrode 7, a liquid crystal 8, a transparent electrode 9, a color filter 10, a second substrate 11 and a second polarizing plate 12.

The backlight 2 is formed by, for example, incorporating a light source such as a cold cathode luminescent tube and emits illumination light BL radiated as a plane toward the first polarizing plate 3. The first polarizing plate 3 only transmits specific polarized light among the illumination light BL emitted from the backlight 2. The light focusing plate 4 is arranged on the opposite side of the polarizing plate 3 to the backlight 2.

The light focusing plate 4 focuses illumination light BL entering from the backlight 2 through the first polarizing plate 3 on the net-shaped arrangement of the reflective pixel electrodes 7 provided on the first substrate 5. The structure of the light focusing plate 4 is later explained in detail.

The first substrate 5 is, for example, formed of a transparent material such as glass. On the upper surface of the first substrate 5 is formed a TFT (Thin Film Transistor) element not shown in the figure. The TFT element is provided correspondingly to each of the transparent pixel electrodes 6 and each of the net-shaped portions 7a of the reflective pixel electrode 7, respectively.

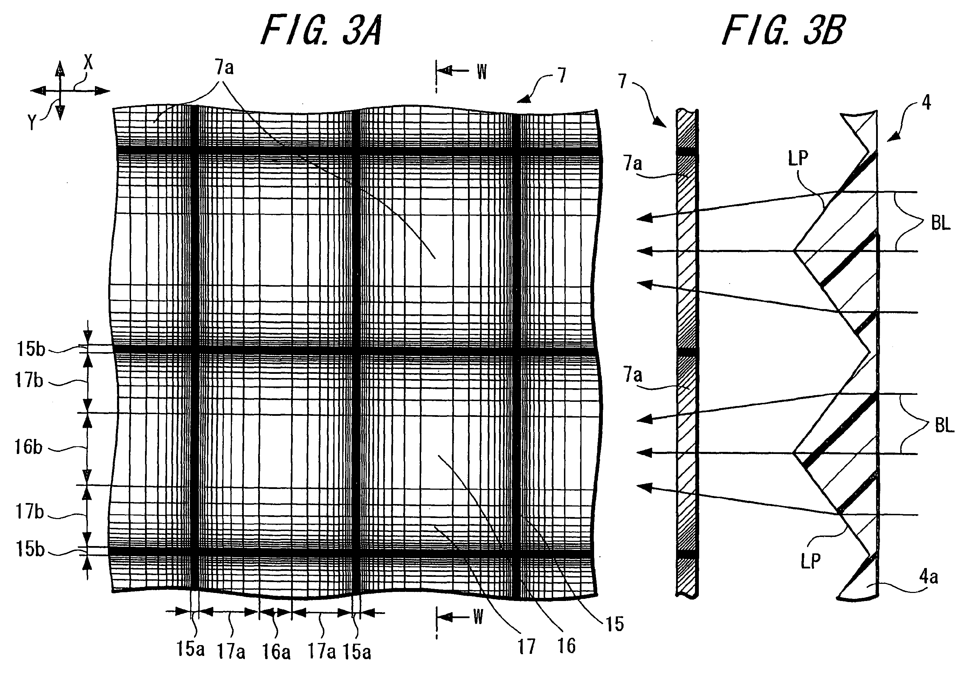

On the upper surface of the first substrate 5 is formed the transparent pixel electrode 6 of a predetermined thickness having a predetermined pattern. The transparent pixel electrode 6 is made of, for example, a transmissive film such as ITO (Indium Tin Oxide) which transmits conductive light. Further, after a thin film is formed on the first substrate 5 by, for example, sputtering, the transparent pixel electrode 6 is processed into a predetermined pattern by a processing method such as laser processing. The transparent pixel electrodes 6 are arranged on the surface of the first electrode 5 correspondingly to the arrangement of pixels in the liquid crystal display apparatus 1. Note that, as shown in FIG. 3 for example, when the horizontal direction is assumed to be an X direction and the vertical direction is assumed to be a Y direction on the screen, the transparent pixel electrodes 6 are arranged at regular intervals at least with respect to the Y direction and are arranged on the straight line along the X direction.

The reflective pixel electrode 7 is formed so as to be superimposed on the reflective pixel electrodes 6. In the reflective pixel electrode 7 are formed a number of net-shaped portions 7a having the outer shape of a quadrangle as shown in FIG. 3, for example. A number of net-shaped portions 7a are arranged at regular intervals in the X direction and in the Y direction to form such shape as squares on a chessboard which are elongated in the Y direction. Each of the net-shaped portions 7a is formed to have a gradation portion of reflectance, and in this embodiment the reflectance is continuously changed in the gradation portion in all four directions of the horizontal direction (X direction) and the vertical direction (Y direction).

Specifically, each of the net-shaped portions 7a of the reflective pixel electrode 7 has a structure that includes: high-reflective portions of four outer sides 15 (15a in the X direction, 15b in the Y direction) having reflectance of 100% or close thereto, that is, having light transmittance of 0% or close thereto, which are formed as portions of high light reflectance; low-reflective portions of inner center portions 16 (16a in the X direction, 16b in the Y direction) having reflectance of 0% or close thereto, that is, having light transmittance of 100% or close thereto, which are formed as portions of low light reflectance; and intermediate portions 17 (17a in the X direction, 17b in the Y direction) between the high-reflective portions 15 and low-reflective portions 16, where the reflectance is continuously and gradually reduced.

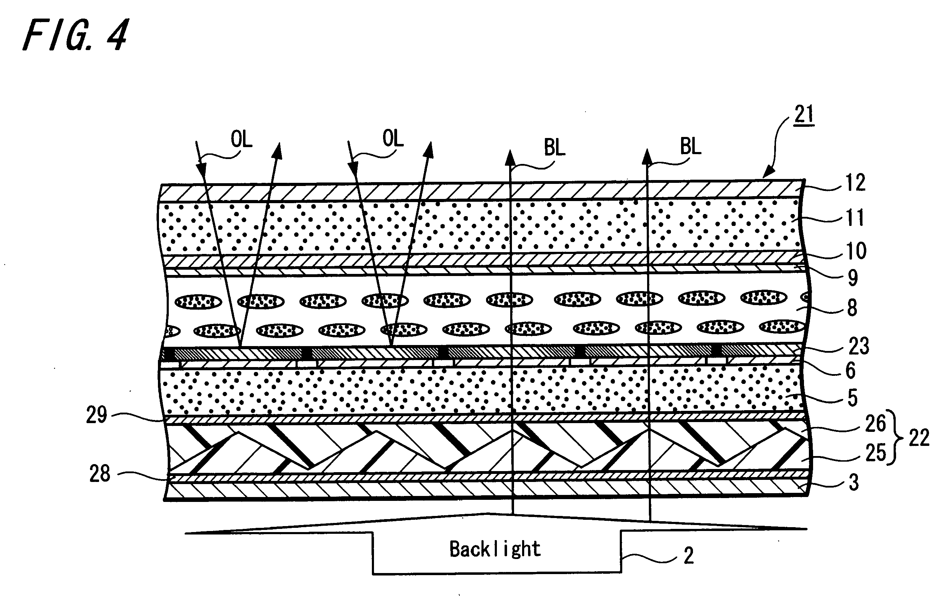

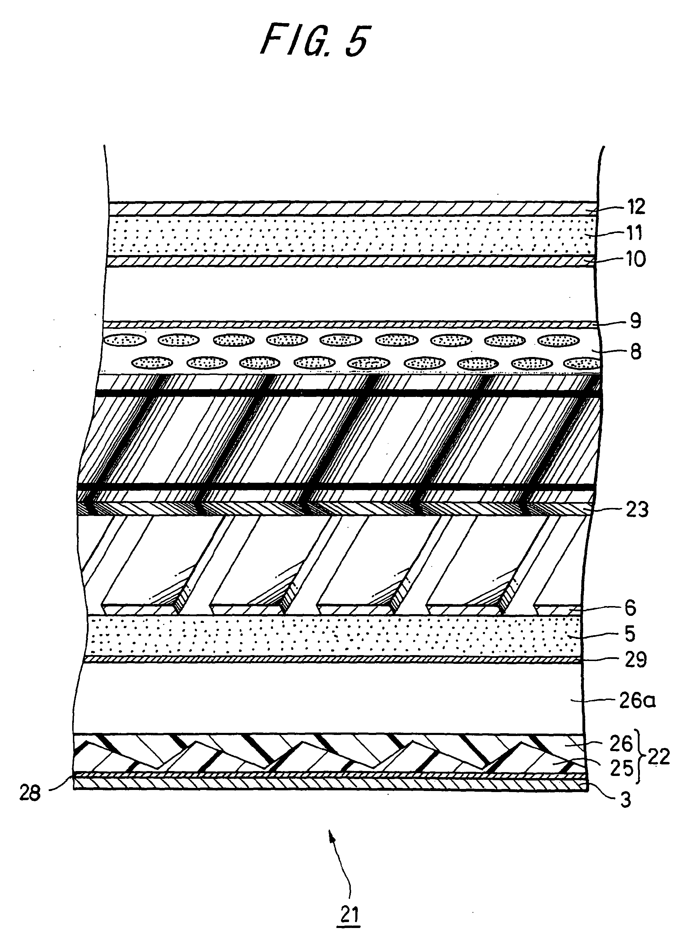

With respect to the high-reflective portions 15, low-reflective portions 16 and intermediate portions 17, it is difficult to show gradation practically in FIGS. 1 through 3 (as well as in FIGS. 4 through 6), and so in this embodiment the gradation is expressed with lines the interval of which becomes gradually wide from the inner side toward the outer side.

The above described reflective pixel electrode 7 is formed of, for example, a reflective film made of aluminum or the like which is conductive and reflects light. With the conductivity, the reflective pixel electrode 7 is electrically connected to the transparent pixel electrode 6. The reflective pixel electrode 7 can be formed by, for example, a vacuum deposition method in which metal in high temperature is evaporated to be deposited as a thin film. For example, a jig having a number of comb-shaped shielding portions provided at intervals corresponding to the size of the net-shaped portions 7a is used and is arranged on the front surface of the reflective pixel electrode 7 with a predetermined gap in between, and the vacuum deposition is performed.

At this time, the high-reflective portions 15a and 15b in the X direction and Y direction are formed by means of the gap between the shielding portions of the jig, and the deposition is performed twice with the posture of the jig being altered by 90 degrees at the second time. Hence, a high-reflective portion (the high-reflective portion 15b extending in the X direction, for example) can be formed by the first deposition, and the other high-reflective portion (the high-reflective portion 15a extending in the Y direction, for example) can be formed by another deposition with the posture of the jig altered by 90 degrees. Further, the gradation in the intermediate portion 17 can be formed by adjusting the deposition amount that enters the back side of the shielding portion with an appropriate gap being provided between the reflective pixel electrode 7 and the shielding portion, and thus the thin film in which the reflectance is continuously changed with a gradation can be obtained.

The second substrate 11 is made of, for example, a transparent material such as a glass plate. On the lower surface of the second substrate 11 is formed the color filter 10, and on the color filter 10 is formed the transparent electrode 9. The transparent electrode 9 and reflective pixel electrode 7 are provided approximately in parallel and are faced to each other. The transparent electrode 9 forms an electric field with the reflective pixel electrode 7 and transparent pixel electrode 6. The transparent electrode 9 is formed of, for example, a transmissive film made of ITO (Indium Tin Oxide) or the like which is conductive and transmits light. The transparent electrode 9 is formed by sputtering, for example.

The liquid crystal 8 is enclosed between the first substrate 5 and second substrate 11. The liquid crystal 8 transmits or shields light entered from either the side of the first substrate 5 or the side of the second substrate 11 depending on an electric field formed between the transparent electrode 9, and the reflective pixel electrode 7 and transparent pixel electrode 6.

On the second substrate 11 is formed the color filter 10 in which microscopic color layers of red (R), green (G), and blue(B) and a shielding layer termed black matrix are formed corresponding to the arrangement of the net-shaped portions 7a in the reflective pixel electrode 7. Each of the color layers is arranged correspondingly to the arrangement of the net-shaped portions 7a and the transparent pixel electrodes 6. A combination of the net-shaped portion 7a in the reflective pixel electrode 7 and transparent pixel electrode 6, and the color layer corresponding thereto constitute one pixel in the liquid crystal display apparatus 1.

On the upper surface of the second substrate 11 is provided the second polarizing plate 12 which transmits only specific polarized light among external light OL entered from the outside. Further, the second polarizing plate 12 transmits light reflected on the reflective pixel electrode 7 after the second polarizing plate 12 transmits the external light OL. Furthermore, the second polarizing plate 12 transmits light, which is transmitted through the net-shaped portions 7a of the reflective pixel electrode 7, among the illumination light BL.

In the liquid crystal display apparatus 1 having the above described structure, when a sufficient amount of external light OL with which the visibility is secured enters from the second substrate 11 side, the external light OL is reflected by the reflective pixel electrode 7 and is again emitted to the second substrate 11 side to display an image. Further, in the case where the amount of the external light OL is not sufficient, the backlight 2 is turned on and so the illumination light BL is emitted to the second substrate 11 side through the net-shaped portions 7a of the reflective pixel electrode 7 to display an image.

Accordingly, when an image is displayed using the external light OL, the more amount of light is reflected by the reflective pixel electrode 7, the brighter screen is obtained; and when an image is displayed using the illumination light BL, the more amount of illumination light BL is transmitted through the net-shaped portions 7a, the more brighter screen is obtained.

However, when the area of the low-reflective portion 16 in the center is enlarged in order to increase the amount of illumination light BL transmitted through the net-shaped portion 7a of the reflective pixel electrode 7, the reflection area of the reflective pixel electrode 7 is reduced and the brightness on the screen is reduced when the external light OL is used to display an image. Inversely, when the area of the intermediate portion 17 of the reflective pixel electrode 7 is enlarged, the reflection area is enlarged and the area of the low-reflective portion 16 is reduced, and therefore the brightness on the screen is reduced when the illumination light BL is used to display an image.

Further, the light focusing plate 4 is formed of one sheet member as shown in FIGS. 1 through 3. The light focusing plate 4 has a planarized surface 4a to be the backlight 2 side and on the other surface to be the first substrate 5 side are formed a number of line-shaped prisms LP extending in the X direction (in the horizontal direction on the screen). The line-shaped prisms LP have the shape of a mound whose section is triangular and the triangles having the same dimensions and shape are continuously arranged in the Y direction at regular intervals.

The planarized surface 4a of the light focusing plate 4 is bonded to the upper surface of the first polarizing plate 3 through an adhesive member. Each vertex of the line-shaped prisms LP of the light focusing plate 4 is brought in contact with the lower surface of the first substrate 5 and is bonded with the adhesive member. Thus, between the light focusing plate 4 and the first polarizing plate 3 is formed an air chamber 18 which is filled with air and whose shape is antisymmetric with the line-shaped prisms LP. A transparent synthetic resin can be used as a material for the light focusing plate 4. The light focusing plate 4 can be made by injection molding, for example. The line-shaped prisms LP have the thickness of approximately 0.1mm to 2.0mm. Further, the adhesive member is formed of a member which transmits light.

FIGS. 3A and 3B are views showing the positional relationship between the reflective pixel electrode 7 and the light focusing plate 4, in which FIG. 3A is a plan view and FIG. 3B is a W-W line sectional view of FIG. 3A. As shown in FIGS. 3A and 3B, the line-shaped prisms LP in the light focusing plate 4 focus the illumination light BL from the backlight 2 entering from the side of the planarized surface 4a into the light having the width approximately equal to that of the low-reflective portion 16b in the Y direction in the rectangular net-shaped portion 7a of the reflective pixel electrode 7. Therefore, on the arrangement of the net-shaped portions 7a in the X direction is applied illumination light in the shape of a belt (line).

In the case where the light focusing plate 4 is not provided, due to existence of the high-reflective portions 15a, 15b and the intermediate portions 17a, 17b, the illumination light BL entering between the adjacent net-shaped portions 7a in the Y direction is not transmitted to the side of the second substrate 11 in the high-reflective portions 15a, 15b, however, when the light focusing plate 4 is provided, the illumination light BL is introduced to the low-reflective portions 16a, 16b. Accordingly, as compared with the case in which the light focusing plate 4 is not provided, the amount of illumination light BL transmitted through the net-shaped portion 7a among light emitted from the backlight 2 increases. Further, since the intermediate portions 17a, 17b are formed in the net-shaped portion 7a, the amount of light BL increases by the amount of light transmitted through those portions.

In order to increase the amount of light transmitted through the net-shaped portions 7a of the reflective pixel electrode 7, it is obvious that the low-reflective portions 16a, 16b are made large and the intermediate portions 17a, 17b are made as small as possible. However, dimensions of the low-reflective portions 16a, 16b and the intermediate portions 17a, 17b are limited as described above in relation to the reflection area of the reflective pixel electrode 7. Therefore, it is necessary to optimize the dimensions of the low-reflective portions 16a, 16b and the intermediate portions 17a, 17b.

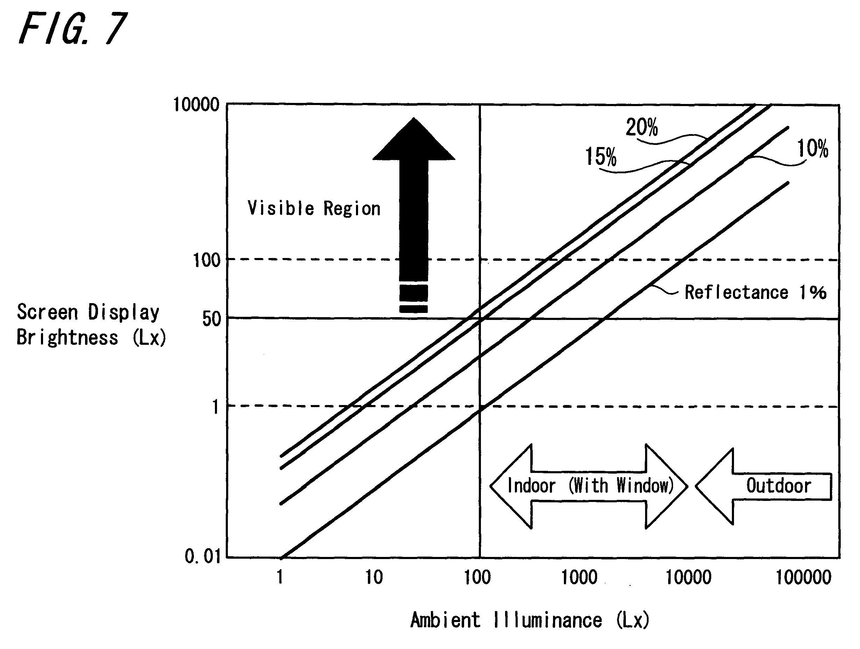

FIG. 7 is a graph showing an example of the relation between the ambient illuminance and the brightness on the display screen in accordance with the reflectance on the screen of a liquid crystal display apparatus. Ambient illuminance (Lux) is shown on the horizontal axis and screen display brightness (Lux) is shown on the vertical axis.

Visibility on the screen of the liquid crystal display apparatus 1 depends on the reflectance on the screen. Typically, when the external light OL is used to display an image in liquid crystal display apparatus 1, ambient illuminance is 100 (Lx) or more in the environment where the liquid crystal display apparatus 1 is provided. In such ambient illuminance, when the reflectance on the screen of the liquid crystal display apparatus 1 is considerably low, an image displayed on the liquid crystal display apparatus 1 using the external light OL cannot be recognized accurately. Hereupon, the reflectance is the ratio of the external light OL again output by the reflection to the front screen of the liquid crystal display apparatus 1 to the external light OL incident on the screen of the liquid crystal display apparatus 1.

As shown in FIG. 7, when the ambient illuminance is 100 (Lx) or more, 50 (Lx) or more is assumed to be required for the brightness on the screen of the liquid crystal display apparatus 1. Further, in order to secure the visibility in the liquid crystal display apparatus 1 in a room where the external light OL enters, the reflectance of at least 5 to 10% on the screen of the liquid crystal display apparatus 1 is required.

On the other hand, all the external light OL entered from the second polarizing plate 12 side in the liquid crystal display apparatus 1 is not necessarily reflected on the reflective pixel electrode 7 to be again output from the second polarizing plate 12 to the outside. In other words, with respect to the external light OL entered from the outside of the liquid crystal display apparatus 1, all the light is not necessarily reflected to be output to the side of the second substrate 11. For example, when an ideal state is assumed in which 100% of the external light OL entering the first substrate 5 is reflected, the ratio of light, which is transmitted through the second polarizing plate 12, among the external light OL entered from the outside is about 45%, and the ratio of the light transmitted through the color filter is about 40%, when entering and reflecting in total.

Hence, even in the ideal state, the maximum reflectance of the liquid crystal display apparatus 1 is about 18%. In practice, the reflective pixel electrode 7 formed in the first substrate 5 is divided by the unit of a pixel, and so even when a case is assumed in which the net-shaped portion 7a is not formed in the reflective pixel electrode 7 (that is, the whole of the reflective pixel electrode 7 is made to be a reflective surface), 16% is the maximum reflectance of the liquid crystal display apparatus 1.

Therefore, in order to secure the reflectance of at least 5 to 10% in the liquid crystal display apparatus 1 as described above, a percentage of the reflection area occupied is required to be 31 to 62%. Specifically, in order to secure the reflectance of at least 5 to 10% in the liquid crystal display apparatus 1, dimensions of the low-reflective portions 16a, 16b and of intermediate portions 17a, 17b in the net-shaped portions 7a of the reflective pixel electrode 7 are required to be determined such that as much as light is transmitted through the low-reflective portion 16a, 16b in the range of 38% to 69% of the ratio of an occupied opening area.

As shown in FIGS. 4 to 6, a liquid crystal display apparatus 21 according to the second embodiment of the present invention has a structure in which the structures of the light focusing plate 4 and the reflective pixel electrode 7 in the above described liquid crystal display apparatus 1 are altered. The second embodiment is different from the first embodiment with respect to a light focusing plate 22 and a reflective pixel electrode 23, and so the explanation is hereinafter made on those portions, where the same reference numerals as those in the first embodiment are given to the same portions in the second embodiment and the explanation thereof is omitted.

The light focusing plate 22 is formed of a first sheet member 25 and a second sheet member 26. The first sheet member 25 has a similar structure to the light focusing plate 4 as described in the first embodiment, in which one of the surfaces is a planarized surface 25a and on the other surface are formed a number of line-shaped prisms LP. The second sheet member 26 is formed to have the shape that matches unevenness caused by the line-shaped prisms LP of the first sheet member 25 to be integrally provided. In addition, the surface of the second sheet member 26, which is not faced to the first sheet member 25, is a planarized surface 22a. With a state in which the first sheet member 25 and the second sheet member are bonded, respective planarized surfaces 25a, 26a are positioned in parallel.

Similarly to the first sheet member 25 the second sheet member 26 is made of synthetic resin, however refractive index thereof is different from each other. In this embodiment, the refractive index of the synthetic resin forming the second sheet member 26 is set lower than that of the refractive index of the synthetic resin forming the first sheet member 25. For example, the refractive index of the first sheet member 25 is set to 1.60 or more and the refractive index of the second sheet member 26 is set to 1.50 or less. The light focusing plate 22 is made by injection molding, for example. The light focusing plate 22 has the thickness of approximately 0.2mm to 2.0mm, for example.

The light focusing plate 22 having such structure is positioned between the first polarizing plate 3 and the first substrate 5. Specifically, the first polarizing plate 3 is bonded to one surface of the light focusing plate 22 through an adhesive 28, and the first substrate 5 is bonded to the other surface of the light focusing plate 22 through an adhesive 29. The adhesive is made of a material which transmits light.

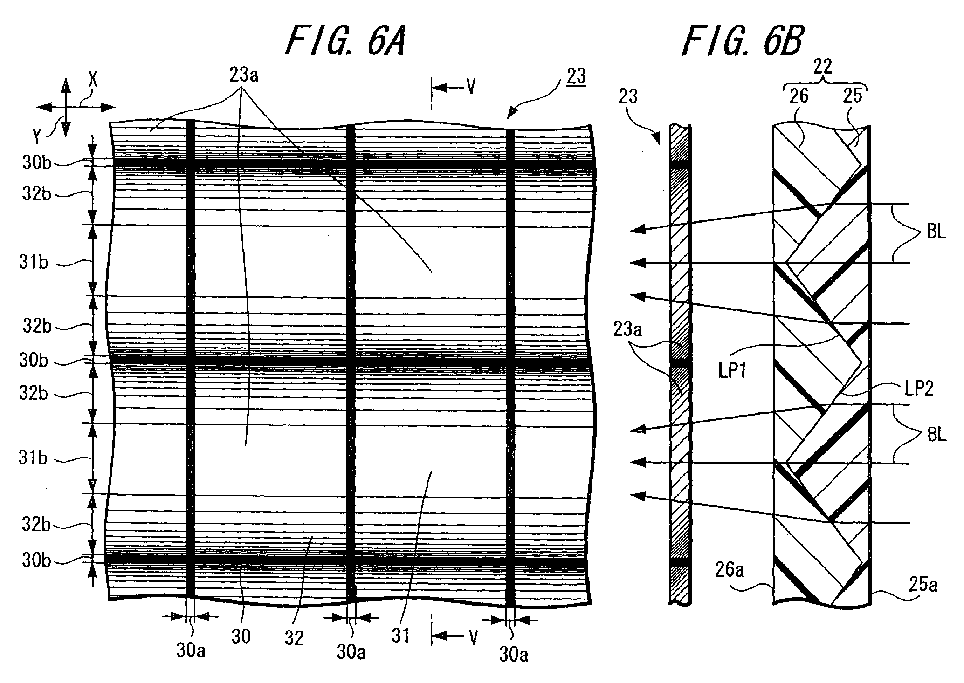

Further, as shown in FIG. 6 and other figures, a number of net-shaped portions 23a having a quadrangular shape are formed in the reflective pixel electrode 23. A number of net-shaped portions 23a are arranged at regular intervals in the X direction and in the Y direction, respectively, and have the shape of squares elongated in the Y direction on a chessboard. Each of the net-shaped portions 23a is formed to have gradation of reflectance, and in this embodiment the gradation of reflectance is made to change continuously only in the vertical direction, that is, in two directions (in the Y direction).

Specifically, each net-shaped portion 23a in the reflective pixel electrode 23 has a structure including: high-reflective portions 30 (30a in the X direction, 30b in the Y direction) which are formed on four outer sides as portions having high reflectance of light; a low-reflective portion 31 (31b in the Y direction) which is formed in the inner center portion as a portion having low reflectance of light; and an intermediate portion 32 (32b in the Y direction) between the high-reflective portion 30b and the low-reflective portion 31b, where the reflectance is continuously and gradually reduced.

With the second embodiment having the above described structure, similar effectiveness to the above first embodiment can be obtained. Specifically, as shown in FIGS. 6A and 6B, since the refractive index of the line-shaped prisms LP1 in the first sheet member 25 of the light focusing plate 4 is set higher than that of the line-shaped prisms LP2 in the second sheet member 26 of the light focusing plate 4, illumination light BL from the backlight 2, which enters from the planarized surface 25a side, is focused into the light having the width equal to that of the low-reflective portion 16b in the Y direction of the rectangular net-shaped portion 7a formed in the reflective pixel electrode 7. Therefore, illumination light of a belt shape (line shape) is illuminated onto the arrangement of the net-shaped portions 7a in the X direction.

In the case where the light focusing plate 4 is not provided, due to existence of the high-reflective portions 15a, 15b and intermediate portions 17a, 17b, the illumination light BL entering between adjacent net-shaped portions 7a in the Y direction is not transmitted to the side of the second substrate 11 in the high-reflective (low-transmissive) portions 17a, 17b, however, with the light focusing plate 4 being provided, the illumination light BL is introduced to the low-reflective portion 16a, 16b. Therefore, the amount of illumination light BL, which is transmitted through the net-shaped portions 7a, among the illumination light BL emitted from the backlight 2 increases as compared with the case without providing the light focusing plate 4. In addition, since the intermediate portions 17a, 17b are provided in the net-shaped portion 7a, the amount of illumination light BL increases by the amount of light transmitted through those portions.

As described above, according to the embodiments of the present invention, since the light focusing plate 4 or 22 which has line-shaped prisms LP is arranged between the first polarizing plate 3 and the first substrate 5 and the reflectance of the reflective pixel electrode 7 or 23 is continuously and gradually changed to form the net-shaped portion 7a having the gradation, efficiency in using light, that is, the illumination light BL from the backlight 2 can be improved. Hence, illuminance on the screen of the liquid crystal display apparatus 1 can be improved when the backlight 2 is used under a fixed emission power. Further, the illuminance on the screen of the liquid crystal display apparatus 1, when the external light OL is used, can be maintained and improved.

Further, according to the embodiments of the present invention, since line-shaped prisms LP are formed in the light focusing plate 4 or 22, a position of the light focusing plate 4 or 22 with respect to the low-reflective portions of the net-shaped portion 7a in the reflective pixel electrode 7 formed on the first substrate can be determined only with the position determined in the horizontal direction (X direction) on the screen. Accordingly, the liquid crystal display apparatus 1 can be assembled without difficulties, with the result that the manufacturing costs can be reduced.

Further, according to the above described second embodiment of the present invention, since the light focusing plate 22 has the structure including the first sheet member 25 formed of synthetic resin having high refractive index and the second sheet member 26 formed of synthetic resin having low refractive index and the both surfaces of the light focusing plate 22 are planarized, a bonding operation may be performed without difficulties between the light focusing plate 22 and the first substrate 5, and between the light focusing plate 22 and the first polarizing plate 3, with the result that the manufacturing costs can be reduced.

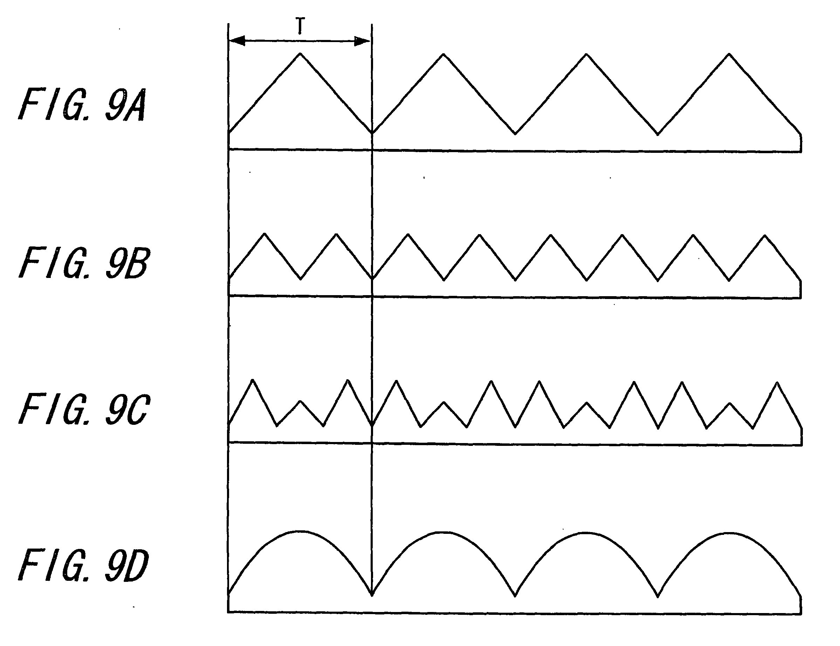

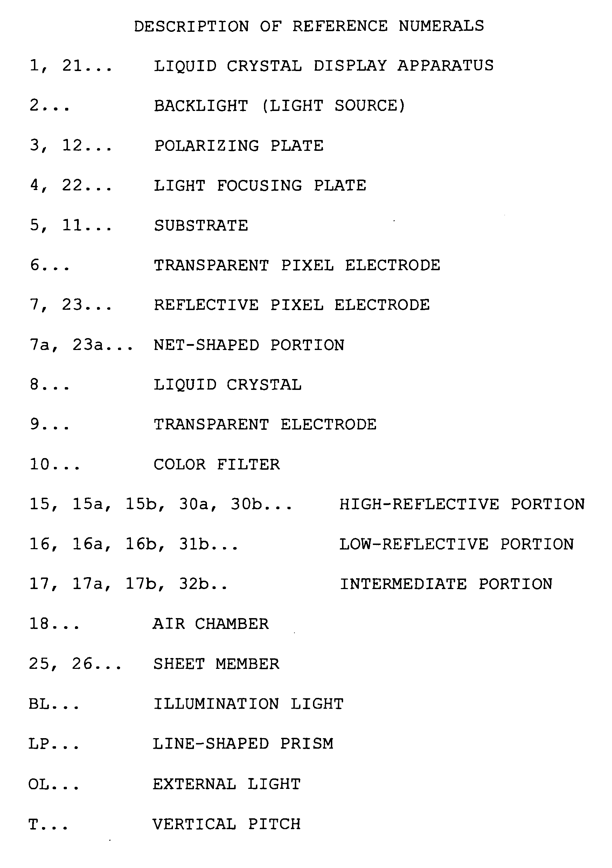

The present invention is not limited to the above described embodiments. For example, in the above described embodiments a structure is provided in which line-shaped prisms LP formed in the light focusing plate 4 and sheet members 25, 26 are positioned such that one of continuous triangles is faced (with the same interval as the vertical pitch T of the LCD pixel) to one line (one pitch) of the net-shaped portion 7a of the reflective pixel electrode 7 (refer to FIG. 9A); however, as shown in FIG. 9B, two of continuous triangles (of half the pitch) are faced, as shown in FIG. 9C, three of continuous triangles (of a third pitch) may be faced, or further such a structure is conceivable in which four or more continuous triangles can be faced. In other words, n number (n is a natural number of one or more) of triangles can be employed.

Further, as shown in FIG. 9C, the line-shaped prisms LP in the light focusing plate 4 and in the sheet members 25, 26 may have different shapes of triangle (having a different vertex angle). Furthermore, as shown in FIG. 9D, the tip of the prism is made less sharp to be a dome shape or a barrel-roof shape.

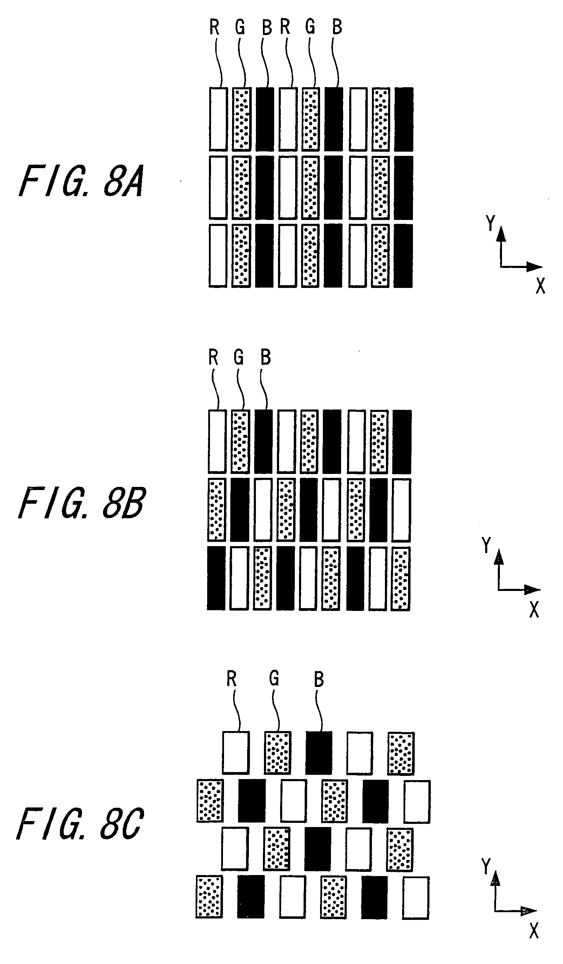

Moreover, in the above described embodiments, an arrangement of pixels is not particularly mentioned, however, as shown in FIGS. 8A to 8C for example, the present invention can be applied to a case having pixel arrangement in which respective pixels of R(red), G(green), and B(blue) colors are arranged at least at regular intervals in the Y direction. FIG. 8A shows what is called a striped arrangement; FIG. 8B shows what is called a mosaic arrangement; and FIG. 8C shows what is called a delta arrangement. With each of the line-shaped prisms LP in the light focusing plate 4 or 22 being respectively arranged with respect to the pixel arranged at regular intervals in the Y direction, the brightness on the screen can be improved in a liquid crystal display apparatus capable of color displaying at the time when using a backlight.

As described above, according to the present invention, since illumination light emitted from a backlight is focused by line-shaped prisms and is incident on the inside of the reflective pixel electrode through a first substrate, the amount of illumination light passing through the inside portion of low reflectance among the portion having the gradation of reflectance formed in the reflective pixel electrode increases as compared with the case where the line-shaped prisms are not provided. Accordingly, a liquid crystal display apparatus can be obtained in which illuminance on the screen when an image is displayed using a backlight can be improved without increasing light amount of the backlight, light efficiency in using the backlight can be improved, and the manufacturing costs can be reduced.

## Claims

1. A liquid crystal display apparatus comprising:
a first substrate provided with a reflective pixel electrode which reflects light,
a second substrate in which a transparent electrode facing said reflective pixel electrode is formed and which is arranged in parallel with said first substrate,
a liquid crystal enclosed between said first substrate and said second substrate,
a backlight applying illumination light from the back surface side of said first substrate, and
a light focusing plate including a number of line-shaped prisms which focus illumination light from said backlight onto arrangement of the reflective pixel electrodes;
wherein a portion having gradation of reflectance, in which the reflectance is low on the inner side and continuously changes to be gradually high toward the outer side, is provided in said reflective pixel electrode for each pixel unit.

2. A liquid crystal display apparatus according to claim 1,
wherein said portion having gradation of reflectance is provided in said reflective pixel electrode such that the reflectance continuously changes in two horizontal directions or in four directions of horizontal and vertical directions.

3. A liquid crystal display apparatus according to claim 1,
wherein said light focusing plate includes a first sheet member which is made of synthetic resin and in which convex line-shaped prisms having a predetermined refractive index are formed and
the tip of said line-shaped prism is in contact with the back surface side of said first substrate to form an air chamber between the line-shaped prisms and the substrate.

4. A liquid crystal display apparatus according to claim 1,
wherein said line-shaped prisms are formed to continue only in the lateral directions with an interval equal to a pixel pitch in the longitudinal direction or with a 1/n (where n is a natural number of 1 or more) interval of the pixel pitch.

5. A liquid crystal display apparatus according to claim 4,
wherein said line-shaped prism has a triangular shape or a dome shape.

6. A liquid crystal display apparatus according to claim 1,
wherein said light focusing plate includes: a first sheet member made of synthetic resin in which convex line-shaped prisms having a predetermined refractive index are formed and a second sheet member made of synthetic resin which is integrally provided on the surface of said first sheet member, where said line-shaped prisms are formed, and which has a lower refractive index than that of said first sheet member; and both sides of the first sheet member and second sheet member are planarized.

7. A liquid crystal display apparatus according to claim 6,
wherein said light focusing plate includes said first sheet member having the refractive index of 1.60 or more and said second sheet member having the refractive index of 1.50 or less and the thickness of said light focusing plate is in the range of 0.1mm or more and 2.0mm or less.

8. A liquid crystal display apparatus according to claim 6,
wherein said line-shaped prisms are formed to continue only in the lateral directions with an interval equal to a pixel pitch in the longitudinal direction or with a l/n (where n is a natural number of 1 or more) interval of the pixel pitch.

9. A liquid crystal display apparatus according to claim 6,
wherein said line-shaped prisms are formed of a combination of triangular shapes.
